# DEMANDE DE BREVET EUROPEEN

(11) **EP 1 808 425 A2**
(43) Date de publication de la demande: **18.07.2007**
(21) Numéro de dépôt: 07290034.3
(22) Date de dépôt: 10.01.2007
(51) Int. Cl.: C05F 17/02, C05F 17/00

(54) **Procédé de compostage ou de stabilisation de matieres organiques et installation pour la mise enoeuvre dudit procédé**

(30) Priorité: 13.01.2006 FR 0600326
(71) Demandeur: Vinci Environnement, 92500 Rueil Malmaison (FR)
(72) Inventeur: Douzouer, Benjamin, 78220 Viroflay (FR); Seutin, Hugues, 78150 Le Chesnay (FR); Caminade, Bruno, 77350 Boissise-la-Bertrand (FR)
(74) Mandataire: Breese Derambure Majerowicz

(57) **Abrégé**

L'invention concerne un procédé de compostage ou de stabilisation de matières organiques constituant un andain (12) disposé dans une enceinte (2); ledit procédé prévoyant :
- d'introduire un flux d'air frais entrant dans ladite enceinte (2) et
- d'extraire un flux d'air vicié sortant de ladite enceinte (2).

Le procédé comporte au moins une phase de transfert de calories du flux d'air sortant au flux d'air entrant.

L'invention concerne également une installation pour la mise en oeuvre du procédé.

## Description

L'invention concerne un procédé de compostage ou de stabilisation de matières organiques constituant un andain et une installation pour la mise en oeuvre de ce procédé.

L'invention concerne plus particulièrement un procédé et une installation pour le compostage ou la stabilisation aérobie assurant une décomposition des déchets par une fermentation accélérée et contrôlée de la matière organique.

Le compostage et la stabilisation sont des opérations qui consistent à faire fermenter, dans des conditions contrôlées (température, humidité), des déchets organiques en présence de l'oxygène de l'air. Le compostage permet d'obtenir de la matière réutilisable en agriculture alors que la stabilisation permet de stabiliser la matière organique avant de la mettre en décharge.

Afin de maintenir un taux d'oxygène de l'air suffisant et permettre ainsi une fermentation efficace, il est connu dans l'art antérieur des procédés de compostage ou de stabilisation prévoyant d'aérer une enceinte contenant des matières organiques formant de l'andain au moyen d'un dispositif d'aération.

Les dispositifs d'aération sont généralement constitués d'un conduit d'acheminement du flux d'air frais entrant dans l'enceinte et un conduit d'extraction d'un flux d'air vicié sortant. Le compostage et la stabilisation de matières organiques étant des processus aérobies et exothermiques, l'air vicié possède une température plus importante et un taux d'oxygène plus faible que l'air entrant. En outre, l'air vicié est chargé en humidité car la chaleur libérée lors de la fermentation provoque l'évaporation d'une grande quantité d'eau.

Afin de maintenir une température appropriée lors du processus de compostage ou stabilisation, il est connu de réintroduire une partie du flux d'air vicié dans l'enceinte. Cependant, la réintroduction du flux d'air vicié dans l'enceinte est obligatoirement associée à une baisse du taux d'oxygène de l'air à l'intérieur de l'enceinte et le processus de fermentation est affecté.

Ainsi, les procédés de compostage et de stabilisation de l'art antérieur ne proposent pas de réguler précisément et indépendamment à la fois la température et le taux d'oxygène. Par conséquent, la vitesse et l'efficacité de la fermentation sont amoindries.

En outre, la réintroduction de l'air vicié à l'intérieur de l'enceinte provoque également la saturation de l'air de l'enceinte en humidité ce qui provoque des ruissellements et la formation de brouillard qui nuisent à la visibilité de l'opérateur lors des opérations de déchargement ou d'entretien de l'enceinte.

L'invention vise à remédier à ces problèmes en proposant un procédé économique de compostage ou de stabilisation de matières organique permettant une fermentation rapide et efficace grâce à un contrôle précis de la température à l'intérieur de l'enceinte et le maintien d'un taux d'oxygène suffisant à l'intérieur de l'enceinte.

A cet effet, et selon un premier aspect, l'invention propose un procédé de compostage ou de stabilisation de matières organiques constituant un andain disposé dans une enceinte ; ledit procédé prévoyant :
- d'introduire un flux d'air frais entrant dans ladite enceinte et
- d'extraire un flux d'air vicié sortant de ladite enceinte.

Le procédé comporte au moins une phase de transfert des calories de l'air sortant à l'air entrant au moyen d'un échangeur thermique.

Ainsi, ledit procédé de compostage ou de stabilisation est économique car la température à l'intérieur de l'enceinte est régulée en utilisant des calories produites par les micro-organismes lors de l'opération de fermentation.

En outre, il est possible de réguler la température de l'enceinte sans diminuer le taux d'oxygène de l'air et sans charger l'atmosphère de l'enceinte en humidité.

De plus, le procédé permet de réduire les débits des flux d'air mis en jeu. En effet, le flux d'air entrant possédant un taux d'oxygène comparable à celui de l'air atmosphérique, le débit du flux d'air entrant peut être minimisé. Il en résulte une consommation électrique inférieure des moyens de mise en mouvement de l'air.

Enfin, la température du flux d'air sortant est diminuée, permettant ainsi le fonctionnement normal du dispositif de désodorisation de l'air sortant. En effet, il est indispensable que la température de l'air sortant ne dépasse pas 40 °C afin de permettre le fonctionnement du bio-filtre composant le dispositif de désodorisation.

Selon un deuxième aspect, l'invention propose une installation de compostage ou de stabilisation de matières organiques équipée d'une enceinte dans laquelle est placé de l'andain et d'un dispositif d'aération dudit andain comprenant :
- un circuit d'aération comprenant un conduit d'acheminement d'air frais entrant dans ladite enceinte et d'un conduit d'extraction d'air sortant de ladite enceinte ; et
- des moyens de mise en mouvement de l'air au travers dudit circuit d'aération de l'enceinte .

L'installation comporte un échangeur thermique pour transférer des calories du flux d'air sortant au flux d'air entrant

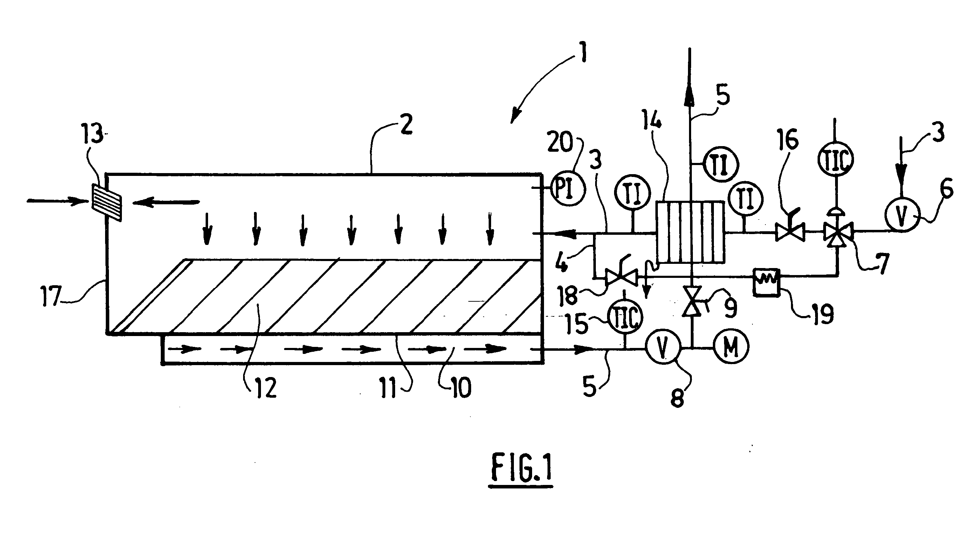

D'autres objets et avantages de l'invention apparaîtront au cours de la description qui suit, faite en référence à la figure 1 qui est une représentation schématique d'une installation de compostage ou de stabilisation comprenant un échangeur thermique selon l'invention.

L'installation 1 de compostage représenté sur la figure 1 comprend une enceinte 2, un circuit d'aération 3, 4, 5 et des moyens de mise en mouvement 6, 8 et de brassage de l'air au travers dudit circuit d'aération 3, 4, 5.

L'enceinte 2 est étanche et fermée par des parois, par exemple en béton, un plafond et une porte 17 ou un rideau permettant l'accès de tracto-chargeur à ladite enceinte 2. La porte 17 ou le rideau peuvent coulisser verticalement ou horizontalement.

La dimension de l'enceinte 2 varie en fonction des quantités de déchets à traiter. Dans un mode de réalisation préféré, la longueur varie entre 15 et 25 mètres et la largeur entre 5,5 et 10 mètres. La hauteur est au minimum de 6 mètres pour permettre le passage des tracto-chargeurs.

Le circuit d'aération est composé d'un conduit d'acheminement 3 d'air frais entrant dans ladite enceinte 2 et d'un conduit d'extraction 5 d'air vicié sortant de ladite enceinte 2. De préférence, l'air entrant est de l'air ambiant aspiré à l'extérieur de l'enceinte 2.

Avantageusement, l'air frais entrant a une composition proche de l'air atmosphérique (composition maximale en oxygène). L'air vicié sortant est appauvri en oxygène et est chargé en gaz dégagés lors du processus de fermentation et notamment en dioxyde de carbone.

Des caniveaux ou conduits d'aération 10 sont insérés dans le plancher de l'enceinte. Lesdits caniveaux 10 sont munis de grilles perforées 11 et sont connectés au conduit d'extraction 5 de l'air sortant. L'andain 12 est disposé sur le plancher de l'enceinte 2 et le conduit d'acheminement 3 est connecté à l'enceinte 2 à une hauteur supérieure à la hauteur de l'andain 12. Ainsi, le flux d'air passe au travers de l'andain 12 afin d'accélérer le processus de compostage ou de stabilisation.

Avantageusement, les caniveaux d'aération 10 possèdent une pente de radier permettant d'acheminer les percolats et condensats vers un regard de récupération. Les percolats et condensats peuvent être soit recyclés en étant aspergés sur les andains 12, soit dirigés vers une station d'épuration externe.

Dans le mode de réalisation représenté, les caniveaux d'aération 10 sont disposés parallèlement à la direction de chargement de l'enceinte 2. Cependant, une enceinte 2 comportant des caniveaux d'aération 10 disposés perpendiculairement à la direction de chargement de l'enceinte 2 peut être prévu afin de débuter l'aération de l'andain 12 dès le début de la constitution de celui-ci.

Le nombre de caniveaux 10 est fonction des dimensions de l'enceinte 2.

L'installation 1 comporte un échangeur thermique 14 permettant de transférer des calories de l'air sortant vers l'air entrant. A cet effet, le conduit d'acheminement 3 de l'air entrant et le conduit d'extraction 5 de l'air sortant sont connectés audit échangeur thermique 14.

Dans un mode de réalisation préféré de l'invention, l'échangeur thermique 14 est un échangeur à plaques. Le flux d'air sortant et le flux d'air entrant circulent dans des espaces délimités par lesdites plaques et un transfert de calories s'effectue de l'air sortant vers l'air entrant. L'échangeur 14 possède une garde hydraulique permettant de récupérer les condensats.

L'installation 1 comporte des moyens 6, 8 de mise en mouvement de l'air au travers dudit circuit d'aération de l'enceinte 2.

Dans un mode de réalisation préféré, les moyens de mise en mouvement 6, 8 de l'air dans le circuit d'aération se composent d'un premier ventilateur 6 connecté au conduit d'acheminement 3 de l'air entrant et d'un second ventilateur 8 connecté au conduit d'extraction 5 de l'air sortant. Avantageusement, les ventilateurs 6, 8 fonctionnent à des débits sensiblement voisins, le débit du second ventilateur 8 étant légèrement supérieur au débit du premier ventilateur 6.

Ainsi, l'enceinte 2 est maintenue en légère dépression afin de limiter les dégagements d'odeur à l'extérieur de l'enceinte 2. En outre, la dépression à l'intérieur de l'enceinte 1 permet un niveau d'étanchéité moindre dans la zone de la porte 17 ou du rideau.

Dans un mode de réalisation préféré, l'installation 1 est équipée d'une canalisation de dérivation 4 de l'air entrant. La canalisation 4 est connectée au circuit de circulation de l'air entrant d'une part en amont de l'échangeur thermique 14 et d'autre part en aval de celui-ci. Ainsi, le flux d'air entrant passant au travers de la canalisation de dérivation ne passe pas au travers de l'échangeur thermique 14. On notera que les termes « aval » et « amont » sont définis par rapport au sens de circulation de l'air.

Dans le mode de réalisation représenté, une vanne trois voies 7 est disposée à la jonction « amont » entre le conduit d'acheminement 3 de l'air entrant et la canalisation de dérivation 4. La vanne trois voies 7 permet de répartir le flux d'air entrant entre le conduit d'acheminement 3 de l'air entrant et la canalisation de dérivation 4. La vanne trois voies 7 peut être une vanne tout ou rien ou une vanne de régulation.

Avantageusement, l'installation 1 est équipée d'un dispositif de chauffage 19 disposé dans le conduit d'acheminement 3 d'air entrant ou dans la canalisation de dérivation 4, tel que représenté sur la figure 1.

En outre, l'installation 1 est équipée d'une sonde de température 15 mesurant la température dans le circuit et permettant ainsi de réguler la température de l'air dans le circuit. La température peut être mesurée dans le conduit d'amenée 3 de l'air entrant et/ou dans la canalisation de dérivation 4 et/ou dans le conduit d'extraction 5 de l'air sortant. Avantageusement, la sonde de température 15 est placée dans le conduit d'extraction 5 de l'air sortant.

Un dispositif de régulation de la température de l'air est connecté à la (aux) sonde(s) de température 15 et agit sur la vanne trois voies 7 et/ou sur le dispositif de chauffage 19 et/ou sur le débit des ventilateurs 6, 8 afin de réguler la température à l'intérieur de l'enceinte 2.

La pression à l'intérieur de l'enceinte 2 est mesurée par un manomètre 20. Le conduit d'acheminement 3 de l'air entrant, le conduit d'extraction 5 de l'air sortant et la canalisation de dérivation 4 sont chacun équipés d'une vanne 9, 16, 18 permettant d'agir sur la pression à l'intérieur de l'enceinte 2.

L'enceinte 2 est équipée d'une grille d'aération 13, disposée au plafond ou au-dessus de la porte, permettant de maintenir une pression dans l'enceinte 2 proche de la pression atmosphérique. La taille de la grille d'aération 13 est variable et fonction de la puissance des ventilateurs 6, 8 utilisés.

Afin de limiter les nuisances olfactives, l'air extrait par les ventilateurs 6, 8 est dirigé vers un dispositif de désodorisation, non représenté, avant d'être recyclé ou libéré dans l'atmosphère.

Avantageusement, le compostage ou la stabilisation des matières organiques est réalisé par association de plusieurs installations 1 selon la présente invention. Au début du processus une première enceinte 2 est chargée de matières organiques et au cours du processus de compostage, l'andain 12 est retourné et transporté dans des enceintes 2 adjacentes.

Le procédé de compostage ou de stabilisation selon la présente invention est le suivant :

L'enceinte 2 est chargée avec de la matière organique de manière à former un andain 12 et le dispositif d'aération est déclenché. Le flux d'air neuf entrant est introduit dans l'enceinte 2 et le flux d'air sortant est extrait de l'enceinte 2.

Dans un mode de réalisation préféré de l'invention, le procédé prévoit de mesurer la température du flux d'air sortant, entrant ou à l'intérieur de l'enceinte 2. De préférence, on mesure la température du flux d'air sortant.

Avantageusement, au démarrage, le flux d'air entrant peut-être chauffé avant que lui soient transférées des calories du flux d'air sortant. A cet effet, le dispositif de chauffage 19 est déclenché.

Après une période de stabilisation de la température, le procédé prévoit une phase de transfert lors de laquelle, le flux d'air frais entrant et le flux d'air vicié sortant passent aux travers de l'échangeur thermique 14 et des calories du flux d'air sortant sont transférées au flux d'air entrant.

Lors de cette phase de transfert, la température est contrôlée et lorsqu'elle devient supérieure à une température basse et/ou inférieure à une température haute, le dispositif de régulation agit sur le dispositif de chauffage 19 et/ou la vanne trois voies 7 et/ou sur les moyens de ventilation 6, 8.

Lorsque la température est inférieure à une température-seuil basse, au moins une partie de l'air entrant est chauffée. A cet effet, le dispositif de chauffage 19 est activé. Dans le mode de réalisation représenté, le dispositif de chauffage 19 est disposé dans la canalisation de dérivation 4. Par conséquent, au moins une partie du flux d'air entrant est déviée vers la canalisation de dérivation 4 au moyen de la vanne trois voies 7.

Le flux d'air entrant est chauffé jusqu'à ce que la température mesurée atteigne une température de consigne supérieure à la température de seuil basse. Lorsque la température atteint la température de consigne, le flux d'air entrant passe à travers l'échangeur thermique 14 et des calories sont de nouveau transférées de l'air sortant vers l'air entrant.

Lorsque la température est supérieure à une température-seuil haute, au moins une partie du flux d'air entrant est déviée par la canalisation de dérivation 4 et au moins une partie du flux d'air entrant ne passe pas au travers de l'échangeur thermique 14 et n'absorbe pas ainsi de calories de l'air entrant. Ainsi, lorsque la vanne trois voies 7 est une vanne tout ou rien, on ne transfère des calories du flux d'air sortant au flux d'air entrant que lorsque la température mesurée est inférieure à la température-seuil haute. Le flux d'air entrant est dévié par la canalisation de dérivation jusqu'à ce que la température mesurée atteigne une valeur de consigne inférieure à la température de seuil haute. Lorsque cette température de consigne est atteinte, le flux d'air entrant passe de nouveau via l'échangeur thermique 14 et des calories sont transférées du flux d'air sortant au flux d'air entrant.

Selon ce procédé, il est ainsi possible de réguler la température à l'intérieur de l'enceinte 2 sans appauvrir le taux d'oxygène à l'intérieur de l'enceinte 2.

On remarquera que le procédé et l'installation selon l'invention sont particulièrement adaptés à l'étape de séchage du processus de compostage.

## Revendications

1. Procédé de compostage ou de stabilisation de matières organiques constituant un andain (12) disposé dans une enceinte (2) ; ledit procédé prévoyant :
- d'introduire un flux d'air frais entrant dans ladite enceinte (2) et
- d'extraire de l'air vicié sortant de ladite enceinte (2) ;
ledit procédé comportant au moins une phase de transfert de calories du flux d'air sortant au flux d'air entrant, ledit procédé étant **caractérisé en ce que** le flux d'air entrant est chauffé avant que lui soient transférées des calories du flux d'air sortant.

2. Procédé de compostage ou de stabilisation de matières organiques selon la revendication 1, dans lequel on mesure la température du flux d'air entrant et/ou du flux d'air sortant et/ou de l'air à l'intérieur de ladite enceinte (2).

3. Procédé de compostage ou de stabilisation de matières organiques selon la revendication 2, dans lequel au moins une partie du flux d'air entrant est chauffée lorsque la température mesurée est inférieure à une température-seuil basse.

4. Procédé de compostage ou de stabilisation de matières organiques selon la revendication 2 ou 3, dans lequel on ne transfère des calories du flux d'air sortant au flux d'air entrant que lorsque la température mesurée est inférieure à une température-seuil haute.

5. Installation (1) de compostage ou de stabilisation de matières organiques pour la mise en oeuvre du procédé selon l'une des revendications 1 à 4, ladite installation étant équipée d'une enceinte (2) dans laquelle est placé de l'andain (12) et un dispositif d'aération dudit andain comprenant :
- un circuit d'aération composé d'un conduit d'acheminement (3) d'air frais entrant dans ladite enceinte (2) et d'un conduit d'extraction (5) d'air vicié sortant de ladite enceinte (2); et
- des moyens de mise en mouvement (6 ,8) de l'air au travers dudit circuit d'aération de l'enceinte ;
ladite installation (1) comportant un échangeur thermique (14) pour transférer des calories du flux d'air sortant au flux d'air entrant et étant **caractérisée en ce qu'**elle comporte en outre un dispositif de chauffage (19) du flux d'air entrant.

6. Installation (1) pour le compostage ou la stabilisation de matières organiques selon la revendication 5, dans laquelle l'échangeur thermique (14) est un échangeur à plaques.

7. Installation (1) pour le compostage ou la stabilisation de matières organiques selon la revendication 5 ou 6, comportant en outre un dispositif de chauffage (19) du flux d'air entrant.

8. Installation (1) pour le compostage ou la stabilisation de matières organiques selon l'une des revendications 5 à 7, dans laquelle les moyens de mise en mouvement de l'air (6, 8) comprennent un premier ventilateur (6) connecté au conduit d'acheminement (3) d'air entrant et un second ventilateur (8) connecté au conduit d'évacuation (5) d'air sortant.

9. Installation (1) pour le compostage ou la stabilisation de matières organiques selon l'une des revendications 5 à 8, comportant une canalisation de dérivation (4) de l'air entrant connectée au circuit de circulation de l'air d'une part en amont de l'échangeur thermique (14) et d'autre part en aval dudit échangeur thermique (14).

10. Installation (1) pour le compostage ou la stabilisation de matières organiques selon l'une des revendications 5 à 9, dans laquelle le conduit d'évacuation (5) est connecté à ladite enceinte (2) au moyen de caniveaux d'aération (10) munis de grilles perforées (11) insérées dans le plancher de l'enceinte (2).

11. Installation (1) pour le compostage ou la stabilisation de matières organiques selon l'une des revendications 5 à 10, comportant une sonde de température (15) mesurant la température dans le circuit et un dispositif de régulation de la température.

12. Installation (1) pour le compostage ou la stabilisation de matière organique selon l'une des revendications 5 à 11, comprenant un dispositif de désodorisation de l'air sortant connecté à la sortie du conduit d'évacuation (5).
